# EUROPEAN PATENT APPLICATION

(11) **EP 1 036 806 A2**
(43) Date of publication of application: **20.09.2000**
(21) Application number: 00830188.9
(22) Date of filing: 13.03.2000
(51) Int. Cl.: C08G 63/64

(54) **Polymeric materials of the polyester-carbonate family and reactions for the formation of such materials**

(30) Priority: 15.03.1999 IT BO990119
(71) Applicant: EVC Compounds (Italia) S.p.A., 48100 Ravenna (IT)
(72) Inventor: Ferruti, Paolo, 20100 Milano (IT); Latini, Giuseppe, 72100 Brindisi (IT)
(74) Representative: Lanzoni, Luciano

(57) **Abstract**

The present invention relates to polymeric materials of the polyester-carbonate family. These materials contain segments of polycaprolactone (PCL) with a molecular weight of between 500 and 15,000, linked or unlinked to segments of polyoxyethylene glycols (PEGs) or polyoxypropylene glycols with a molecular weight of between 188 and 4,000, said materials being defined by the following general formula: 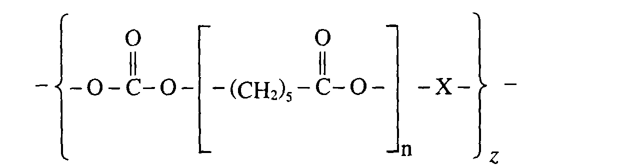 Where:
- n is a number between 4 and 135;
- z is a number between 5 and 300;
- X may be an alkylenic group or another, more complex, group.

## Description

The present invention relates to new polymeric materials of the polyester-carbonate family and the "chain extension" reactions for the formation of such materials.

More specifically, the present invention relates to bio-compatible materials which are preferably, but not exclusively, used in the medical sector, to make objects or equipment designed to come into contact with human or animal tissue.

These new polymeric materials are derived from suitably modified polycaprolactone (hereinafter referred to using the abbreviation PCL), since, as is known, this substance is bio-compatible and therefore suitable for use in the medical sector.

PCL is commercially available in a variety of molecular weights (from 600 to 2,500). There is also some PCL with a higher molecular weight, but this type is not relevant to the present invention.

As is known, PCL is a substance which tends to crystallise and this tendency increases with an increase in its molecular weight.

For example, it is known that a PCL with a molecular weight of 600 does not crystallise, whilst with a molecular weight of 1,250 it takes the form of a wax which partially crystallises and with a molecular weight of 2,500 the substance is quite crystalline.

That is to say, the fact that PCL crystallises may, for some specific uses, be considered a disadvantage.

Another disadvantage may arise in the opposite case. A PCL with low molecular weight "bleeds" when combined with other substances which have larger molecules, since the PCL molecules tend to migrate towards the surface of the product which, therefore, feels sticky and oily.

The use of PCL combined with other substances for the production of materials for various uses, but in particular for the medical sector, therefore involves the above-mentioned disadvantages which are basically caused by the fact that:
1. Using PCL with a high molecular weight leads to the separation of crystals within the product;
2. using PCL with a low molecular weight leads to bleeding within the product.

The main aim of the present invention is, therefore, to overcome the disadvantages of the prior art and to use PCL as a bio-compatible material, providing new bio-compatible polymers which can be used alone or in combination with other known substances, with only a negligible amount of crystallisation or bleeding.

This aim and others are achieved by the new polymers which form the subject matter of the present invention, whose main characteristics are indicated in the claims below.

Briefly, in accordance with the present invention, a carbonate was added to a known PCL molecule: 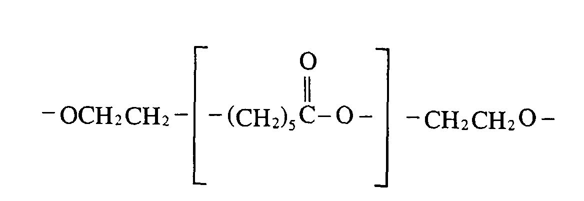 giving a copolymer of the following type:

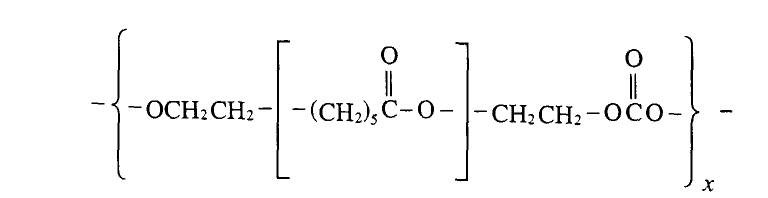

It should be noticed that this substance is no longer a PCL, since the molecule contains a carbonate link.

It is a polyester-carbonate, which is a new substance.

Advantageously, this has a very high molecular weight (around 50,000) and therefore, since the molecule is large, the problem of bleeding no longer exists when it is combined with other molecules.

At the same time, the tendency to crystallise is very limited, since the groups which would tend to crystallise are not aligned in a regular manner within the molecule, but are arranged in an irregular structure. As a result, the tendency to reverse the mixing process due to the separation of crystals is very limited.

There is also a third important advantage.

Alongside these products, it is possible to make copolymers in which branches of the polyester-carbonate are linked to branches of polyoxyethylene glycols (hereinafter referred to with the abbreviation PEG) of the following type:

―(-OCH₂CH₂-)ₘ⁻

The substances obtained are, therefore, copolymers between PCLs attached with carbonate links, but mixed, of the following type:

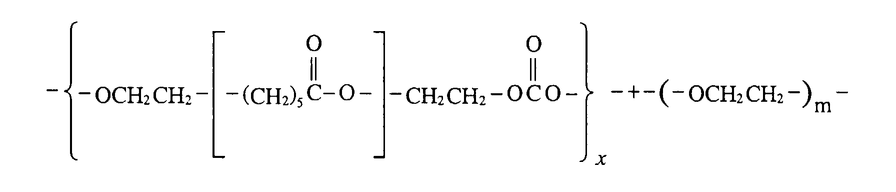

The advantage of this new material lies in the fact that the PEGs are absorbent and it is known that they give the end product in which they are included improved bio-compatibility.

This means that, in terms of bio-compatibility, the outer surface of the end product is improved, therefore, the products are particularly suitable for medical use, whilst the compound remains insoluble in water.

This is the third advantage referred to above.

The following are seven examples of these new substances, indicated by way of example only.

More specifically, they refer to PCL "chain extension" reactions.

The following abbreviations are used in the examples:
- PCL = commercial polycaprolactone;
- TBC = tri-ethylene glycol bis-chloroformate;
- EDPA = N-ethyl-N,N-diisopropylamine;
- DMAP = di-methyl aminopyridine;
- PEG = polyoxyethylene glycol;
- [µ] = intrinsic viscosity.

The new materials obtained are bio-compatible polymers of the polyester-carbonate family containing segments of PCL with a molecular weight varying between 500 and 15,000, preferably between 600 and 5,000, linked or unlinked to segments of PEGs or polyoxypropylene glycols with a molecular weight varying between 188 and 4,000, preferably between 130 and 1,500.

These materials may be defined using the following general formula: 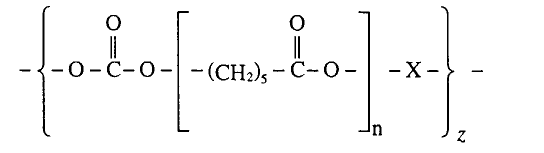 where:
- n is a number between 4 and 135, preferably between 5 and 40;
- z is a number between 5 and 300, preferably between 10 and 200;
- X may be: a) an alkylenic group with the following general formula: 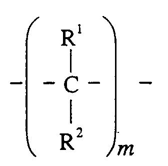 where:
   - R¹ and R² may be H , CH₃ or C₂H₅, preferably H or CH₃;
   - m is a number between 2 and 6, preferably between 2 and 4;
   - X may be: b) a group with the following general formula: 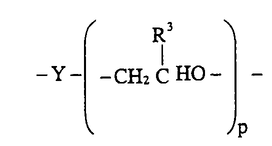
   in which:
   - R³ may be H or CH₃;
   - p is a number between 2 and 90, preferably between 3 and 34;
   where:
   - Y may be zero or a group: 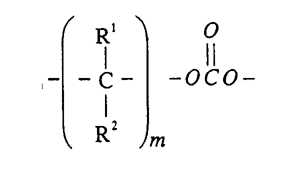
   in which:
   - R¹ and R² may be H, CH₃ , C₂H₅, preferably H or CH₃;
   - m is a number between 3 and 6, preferably between 2 and 4;

### Example 1 (PCL + TBC).

Prepare a solution with 5 ml PCL 1,250 in 0.32M solution in CHCl₃ (1.6 millimoles), 0.55 ml EDPA (3.2 millimoles) and 0.199 g DMAP (1.6 millimoles).

Use a dropper to add 0.34 ml TBC (1.6 millimoles) dissolved in 1 ml of anhydrous CHCl₃. Cool with a water bath while adding the drops of the latter.

The reaction is practically instantaneous, with the mixture becoming very viscose. Dry the solution with the mechanical pump and wash the product with CH₃OH several times.

The intrinsic viscosity is: [µ] = 1.17.

In this first example, with reference to the above-mentioned general formula:
n = 10.7 (mean)
z = 100 (estimated) 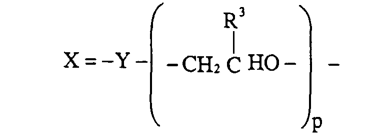 where:
   - in Y, R¹ = R² = H;
   - m = 2;
   - R³ = H;
   - p = 3.

### Example 2 (PCL + PEG).

Prepare a solution with 1.93 ml PEG 600 in 0.83M solution in CHCl₃ (1.6 millimoles) and 0.55 ml EDPA (3.2 millimoles) which is then dropped into 1.8 ml COCl₂ (3.68 millimoles), cooling with a water bath.

Leave to react for 15 minutes in an agitator, then remove the excess COCl₂ gas by bubbling N2 through it for at least an hour.

Finally, drop the solution into 5 ml PCL 1,250 in 0.32M solution in CHCl₃ (1.6 millimoles), 0.55 ml EDPA (3.2 millimoles) and 0.195 g DMAP (1.6 millimoles).

Again, the reaction is instantaneous and the solution is dropped into the mixture while cooled with a water bath.

Dilute in CHCl₃ and extract at least three times with slightly acidic water, then with neutral water until the aqueous phase has a neutral pH. Render anhydrous with Na₂SO₄, filter and dry.

### The intrinsic viscosity is: [µ] = 0.44.

This viscosity refers to the reaction which takes place when the COCl₂ is dropped into the PEG 600 and EDPA substance.

In this second example, with reference to the above-mentioned general formula:
n = 10.7 (mean)
z = 40 (estimated) 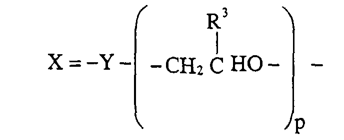 where:
   - in Y, R¹ = R² = H;
   - m = 2;
   - R³ = H;
   - p = 13.6 (mean).

### Example 3 (PCL + PCL).

Prepare a solution with 5 ml PCL 1,250 in 0.32M solution in CHCl₃ (1.6 millimoles) and 0.55 ml EDPA (3.2 millimoles) which is then dropped into 1.8 ml COCl₂ (3.68 millimoles) in 2.05M solution in toluene cooled with a water bath.

Leave to react for 15 minutes in an agitator, then remove the excess COCl₂ gas by bubbling N₂ through it for at least an hour.

Finally, drop this solution into 5 ml PCL 1,250 in 0.32M solution in CHCl₃ (1.6 millimoles) + 0.55 ml EDPA (3.2 millimoles) and 0.195 g DMAP (1.6 millimoles).

Again, the reaction is very rapid (but less so than between the PCL and PEG) and the solution is dropped while cooling with a water bath.

Dilute in CHCl₃ and extract at least three times with slightly acidic water, then with neutral water until the aqueous phase has a neutral pH. Render anhydrous with Na₂SO₄, filter and dry.

The intrinsic viscosity is: [µ] = 1.13.

Again, the viscosity refers to the reaction which takes place when the COCl₂ is dropped into the PCL 1,250 and EDPA solution.

In this third example, with reference to the above-mentioned general formula:
n = 10.7 (mean)
z = 110 (estimated) 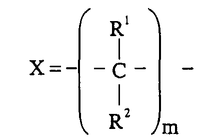 where:
   - R¹ = R² = H;
   - m = 2.

### Example 4 (PCL + PEG).

Proceeding precisely as described in example 2 above, other co-(poly-ε-caprolactone-polyethylene glycol) carbonate products were prepared, as shown in the following table.

| MOLECULAR WEIGHT poly-ε-caprolactone | MOLECULAR WEIGHT polyethylene glycol | [µ] PRODUCT OBTAINED | MOLECULAR WEIGHT PRODUCT OBTAINED (estimated) | Z (estimated) |
|---|---|---|---|---|
| 530 | 400 | 0.38 | 35,000 | 35 |
| 1250 | 400 | 0.46 | 55,000 | 33 |
| 5000 | 400 | 0.71 | 75,000 | 14 |
| 530 | 1000 | 0.48 | 60,000 | 38 |
| 1250 | 800 | 0.36 | 34,000 | 16 |
| 5000 | 1000 | 0.83 | 80,000 | 14 |
| 530 | 1500 | 0.45 | 55,000 | 26 |
| 1250 | 1500 | 0.91 | 95,000 | 35 |
| 5000 | 1500 | 0.95 | 100,000 | 16 |
| 530 | 200 | 0.33 | 30,000 | 38 |

In each case, the same volumes of 0.38M PEG solution and 0.32M PCL solution were used, with the same amounts of other reagents.

### Example 5 (PCL + PCL).

Proceeding precisely as described in example 3 above and with the same operations as indicated in example 4, other polycaprolactone carbonate products were prepared.

| MOLECULAR WEIGHT poly-ε-caprolactone | [µ] PRODUCT OBTAINED | MOLECULAR WEIGHT PRODUCT OBTAINED (estimated) | Z (estimated) |
|---|---|---|---|
| 530 | 0.87 | 85,000 | 148 |
| 5000 | 1.62 | 150,000 | 30 |

### Example 6 (PCL + PCL).

Proceeding precisely as described in example 3, but using two different PCLs in the first and second phases.

In the first phase COCl₂ was used to treat a PCL 530 solution; in the second phase said solution was poured into a PCL 1,250 solution, using solutions with the same molarity as in example 3.

The intrinsic viscosity [µ] of the product is 0.42. The estimated molecular weight is 45,000 and estimated z is 50.

### Example 7 (PCL + polypropylene glycol).

Proceeding precisely as described in example 2, but substituting the PEG solution with a polypropylene glycol 425 solution with the same molarity. The product [µ] = 0.37; with estimated molecular weight 35,000 and estimated z 35.

In addition to the above-mentioned specifications, the present invention may obviously be subject to variations in practical applications, as considered suitable in each case, without thereby departing from the scope of the inventive concept.

## Claims

1. Polymeric materials of the polyester-carbonate family, characterised in that they contain segments of polycaprolactone (PCL) with a molecular weight of between 500 and 15,000, being linked or unlinked to segments of polyoxyethylene glycols (PEGs) or polyoxypropylene glycols with a molecular weight of between 188 and 4,000, it being possible to define said materials with the following general formula: 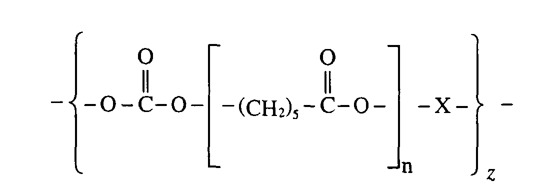 where:
- n is a number between 4 and 135;
- z is a number between 5 and 300.

2. The polymeric materials according to claim 1, characterised in that the molecular weight of the segments of polycaprolactone (PCL) is preferably between 600 and 5,000.

3. The polymeric materials according to claim 1, characterised in that the molecular weight of the segments of polyoxyethylene glycols (PEGs) is preferably between 130 and 1,500.

4. The polymeric materials according to claim 1, characterised in that the number n is preferably between 5 and 40.

5. The polymeric materials according to claim 1, characterised in that the number z is preferably between 10 and 200.

6. The polymeric materials according to claim 1, characterised in that the group X in the general formula is an alkylenic group having the following general formula: 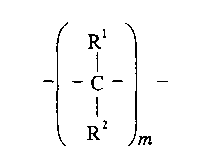 where:
- R¹ and R² may be H, CH₃ or C₂H₅;
- m is a number between 2 and 6.

7. The polymeric materials according to claim 6, characterised in that the groups R¹ and R² are preferably H or CH₃.

8. The polymeric materials according to claim 6, characterised in that the number m is preferably between 2 and 4.

9. The polymeric materials according to claim 1, characterised in that the group X in the general formula is a group with the following general formula: 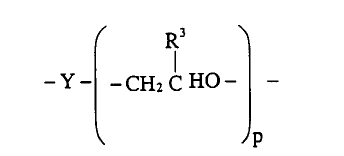 where:
- R³ may be H or CH₃;
- p is a number between 2 and 90.

10. The polymeric materials according to claim 9, characterised in that the number p is preferably between 3 and 34.

11. The polymeric materials according to claim 9, characterised in that the group Y is zero.

12. The polymeric materials according to claim 9, characterised in that the group Y has the following general formula: 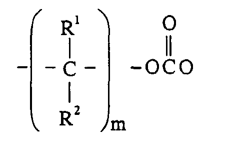 where:
- R¹ and R² may be H, CH₃ or C₂H₅;
- m is a number between 2 and 6.

13. The polymeric materials according to claim 12, characterised in that the groups R¹ and R² are preferably H or CH₃.

14. The polymeric materials according to claim 12, characterised in that the number m is preferably between 2 and 4.

15. A reaction for the formation of the polymeric materials in claims 1 to 14, characterised in that polycaprolactone (PCL) is made into a solution in chloroform (CHCl₃) and N-ethyl-N,N-diisopropylamine (EDPA) and di-methyl aminopyridine (DMAP), into which tri-ethylene glycol bis-chloroformate (TBC) dissolved in anhydrous chloroform (CHCl₃) is dropped, using a water bath for cooling during dropping.

16. A reaction for the formation of the polymeric materials in claims 1 to 14, characterised in that polyoxyethylene glycol (PEG) is made into a solution in chloroform (CHCl₃) and N-ethyl-N,N-diisopropylamine (EDPA) then dropped into phosgene (COCl₂), using a water bath for cooling, the solution being left to react for 15 minutes in an agitator, then dropped onto polycaprolactone (PCL) in solution in chloroform (CHCl₃) and N-ethyl-N,N-diisopropylamine (EDPA) and di-methyl aminopyridine (DMAP), using a water bath for cooling during dropping.

17. A reaction for the formation of the polymeric materials in claims 1 to 14, characterised in that polycaprolactone (PCL) is made into a solution in chloroform (CHCl₃) and N-ethyl-N,N-diisopropylamine (EDPA) then dropped into phosgene (COCl₂), using a water bath for cooling, the solution being left to react for 15 minutes in an agitator, then dropped onto polycaprolactone (PCL) in solution in chloroform (CHCl₃) and N-ethyl-N,N-diisopropylamine (EDPA) and di-methyl aminopyridine (DMAP), using a water bath for cooling during dropping.
